# EUROPÄISCHE PATENTSCHRIFT

(11) **EP 1 647 366 B1**
(45) Veröffentlichungstag und Bekanntmachung des Hinweises auf die Patenterteilung: **10.02.2010**
(21) Anmeldenummer: 04029402.7
(22) Anmeldetag: 11.12.2004
(51) Int. Cl.: B25F 5/00, F16D 43/21, B25B 23/14, B23Q 11/04, B24B 23/02, F16D 7/02, F16D 43/14, B23D 47/12, B23Q 5/04

(54) **Werkzeugmaschine mit einem Überlastschutz**
Powertool with an overload release clutch
Outil motorisé avec un accouplement limiteur de couple

(30) Priorität: 15.10.2004 US 711950
(43) Veröffentlichungstag der Anmeldung: 19.04.2006
(73) Patentinhaber: AEG Electric Tools GmbH, 71364 Winnenden (DE)
(72) Erfinder: Robieu, Thomas, Dipl.-Ing., 71364 Winnenden (DE)
(74) Vertreter: Wasmuth, Rolf

(56) Entgegenhaltungen:
- EP-A- 0 133 645
- EP-A- 0 691 180
- EP-A- 1 470 882
- DE-B- 1 029 646
- DE-B- 1 221 859
- GB-A- 480 899
- GB-A- 1 095 068
- GB-A- 2 084 268
- US-A1- 2003 111 315

## Beschreibung

Die Erfindung betrifft eine elektrisch angetriebene Werkzeugmaschine mit einem Überlastschutz mit den Merkmalen nach dem Oberbegriff des Anspruchs 1.

Aus der EP 1 470 882 A1 ist ein Winkelschleifer mit einem Überlastschutz bekannt, wobei der Überlastschutz in einem abtriebsseitigen Tellerrad eines Kegelradgetriebes angeordnet ist. Werkzeugseitig sind an einer Werkzeugspindel eine Anzahl von Fliehkörpern angeordnet, die in eine Trommel des Tellerrades eingreifen. Die Fliehkörper sind unter Vorspannung gegen die Innenwand der Trommel angedrückt, wodurch eine Mitnahme des Werkzeuges bei anlaufendem Motor sichergestellt ist. Im Falle eines Blockierens des Werkzeuges entfällt die an den Fliehkörpern wirkende Fliehkraft, wodurch ein Durchrutschen des Überlastschutzes ermöglicht ist. Es verbleibt motorseitig ein Restdrehmoment, welches durch die radiale Vorspannung der Fliehkörper bewirkt wird. Zwischen den Fliehkörpern und der Trommel entsteht Reibung mit einer entsprechenden Wärmeentwicklung, die zu einem frühzeitigen Verschleiß des Überlastschutzes führen kann. Die Wärmeentwicklung kann eine sichere Wiederinbetriebnahme nach Beseitigung der Blockierungsursache beeinträchtigen.

Aus der GB 480 899 A ist eine Lamellenkupplung bekannt, die in eine Kupplungstrommel integriert ist. Die Trommel weist eine zylindrische Umfangswand auf, an die sich in axialer Richtung ein konischer Abschnitt anschließt. Lüfterflügel der Trommel sind auf der Außenseite des konischen Abschnittes angeordnet, nicht jedoch auf der Außenseite ihrer Umfangswand.

Die GB 2 084 268 A offenbart einen Überlastschutz mit einer Trommel und mit Fliehkörpern, der für die landwirtschaftliche Anwendung bei einer Strohpresse vorgesehen ist. Eine eingangsseitige Reibkupplung treibt ein Schwungrad an. Eine umlaufende Innenfläche des Schwungrades bildet eine Trommel, an der schwenkbare Fliehkörper in radialer Richtung anliegen. Die Fliehkörper schwenken bei Überlast nach innen und geben die Drehmomentübertragung frei. Der Erfindung liegt die Aufgabe zugrunde, eine gattungsgemäße Werkzeugmaschine mit einem entsprechenden Überlastschutz derart weiterzubilden, daß bei erhöhter Betriebssicherheit eine verbesserte Verschleißfestigkeit gegeben ist.

Diese Aufgabe wird durch eine Werkzeugmaschine mit den Merkmalen des Anspruchs 1 gelöst.

Es wird eine elektrisch angetriebene Werkzeugmaschine mit einem Überlastschutz vorgeschlagen, die auf ihrer angetriebenen Seite eine Trommel und auf ihrer werkzeugseitigen Abtriebsseite mindestens einen Fliehkörper zur Anlage an einer Umfangswand der Trommel aufweist. Die Trommel ist dabei in ein Lüfterrad integriert. Lüfterflügel des Lüfterrades sind radial außenseitig der Umfangswand der Trommel angeordnet. Das außenseitig der Trommel angeordnete Lüfterrad übt eine Mehrfachfunktion aus. Die Lüfterflügel des Lüfterrades wirken als Kühlrippen mit einer vergrößerten Oberfläche, die eine verbesserte Wärmeabfuhr der Reibungswärme aus der Trommel an die Umgebungsluft begünstigen. Gleichzeitig fördern die Lüfterflügel des Lüfterrades einen Luftstrom mit hoher Geschwindigkeit, der als Kühlluftstrom in Verbindung mit der großen überstrichenen Oberfläche die Reibungswärme in einem Konvektionsstrom ableitet. Darüber hinaus stützt das Lüfterrad die integrierte Trommel; thermisch bedingte Verformungen sind vermieden.

Der Entstehungsort von Reibungswärme liegt an der Umfangswand der Trommel, von wo aus ein nur minimaler Weg zu den Lüfterflügeln gegeben ist. Die Lüfterflügel bilden den Ort der Wärmeableitung an den vorbeistreichenden Kühlluftstrom. Der kurze Wärmeleitungsweg zwischen Entstehungsort und Ableitungsort der Reibungswärme vermeidet die Bildung eines Wärmestaus.

Reibungswärme entsteht in dem erfindüngsgemäßen Überlastschutz darin, wenn der werkzeugseitige Abtriebsteil blockiert oder zumindest gebremst ist, während der motorseitige Antriebsteil weiterdreht. In diesem Falle jedoch dreht auch das Lüfterrad unter Erzeugung eines entsprechenden Kühlluftstromes, der eine zuverlässige Wärmeabfuhr herbeiführt. Nach dem Wiedereinkuppeln bleibt die Drehzahl des Lüfterrades mit der integrierten Trommel erhalten, so daß auch Restwärme zuverlässig abgeführt werden kann. Insgesamt ist eine thermische Überlastung in jedem Betriebszustand zuverlässig vermieden.

Das Lüfterrad der Trommel kann in verschiedenen Formen ausgebildet sein. Es kann ein eigenes Lüfterrad der Trommel zugeordnet sein. Vorteilhaft ist das Lüfterrad der Trommel durch ein Gebläserad des Elektromotors gebildet. Das Gebläserad übernimmt dabei gleichzeitig die Funktion der Kühlung des Elektromotors und der Trommel, ohne daß zusätzlicher Bauraum für ein separates Lüfterrad erforderlich ist. Es ergibt sich eine platzsparende Bauweise. Die Integration der Trommel in das Gebläserad des Elektromotors erlaubt eine verkürzte Bauweise.

Das Lüfterrad ist zweckmäßig aus einem Material von hoher Wärmeleitfähigkeit wie Metall und insbesondere aus Magnesium oder einem anderen Leichtmetall wie Aluminium oder dgl. gefertigt. Die hohe Wärmeleitfähigkeit des Metalls trägt zu einer verbesserten Wärmeabfuhr aus der Trommel bei. Gleichzeitig ist die metallische Ausführung des Lüfterrades widerstandsfähig gegen Abrasion. Schleifstaub oder dgl., der mit dem Kühlluftstrom für den Elektromotor angesaugt wird, kann nicht zu einer übermäßigen Abnutzung des Lüfterrades führen.

In vorteilhafter Weiterbildung ist ein Bremsmaterial als Reibbelag an der Umfangswand der Trommel angeordnet. Zweckmäßig ist zumindest die Umfangswand der Trommel und insbesondere die gesamte Trommel aus dem Bremsmaterial gefertigt. Das beispielsweise gesinterte Bremsmaterial, wie es zur Herstellung von Bremsen oder Kupplungen eingesetzt wird, ist verschleißarm, temperaturresistent und bewirkt eine große, präzise definierte Reibkraft zwischen der Trommel und den Fliehkörpern. Durch die Anordnung an der Umfangswand der Trommel steht ein vergleichsweise großes Verschleißvolumen an Bremsmaterial zur Verfügung, wodurch eine lange Lebensdauer gegeben ist. Die ringförmige Anordnung an der Umfangswand der Trommel ist unempfindlich gegen Lagetoleranzen. Ein solches ringförmiges Bremsmaterial kann beispielsweise innenseitig der Umfangswand eingeklebt oder eingepreßt sein. Bei einer Ausgestaltung der Trommel aus dem Bremsmaterial ist ein zusätzliches, die Trommel bildendes Bauteil nicht erforderlich. Die mechanische Abstützung des Bremsmaterials wird durch einen entsprechenden Sitz im Lüfterrad übernommen. Die Anordnung ist konstruktiv und fertigungstechnisch einfach aufgebaut. Der direkte Kontakt des Bremsmaterials mit dem metallischen Körper des Lüfterrades trägt zur verbesserten Wärmeabfuhr bei.

In einer zweckmäßigen Ausführung ist außenseitig des Fliehkörpers ein radial hervorstehender Reibvorsprung angeordnet und insbesondere einteilig mit dem Fliehkörper ausgebildet. Der radial hervorstehende Reibvorsprung weist im Vergleich zur Umfangsausdehnung des Fliehkörpers eine deutlich verringerte Größe auf und erstreckt sich über einen Winkelbereich von beispielsweise 10° bis 30°. Es ist eine vergleichsweise kleine Anlagefläche des Fliehkörpers an der Umfangswand der Trommel mit entsprechend hoher Flächenpressung gebildet. Die Flächenpressung ist infolge der vergleichsweise kleinen räumlichen Erstreckung des Reibvorsprunges im wesentlichen gleichmäßig und konstant über die Oberfläche verteilt. Durch Größe und räumliche Relativanordnung zur Schwenkachse des Fliehgewichtes ist die Anpreßkraft an den Reibbelag konstruktiv präzise vorgebbar. Das Durchrutsch- bzw. Grenzdrehmoment des Überlastschutzes kann exakt eingestellt werden.

In vorteilhafter Weiterbildung ist die Trommel als Buchse in das Lüfterrad eingepreßt. Die Einpressung ist fertigungstechnisch einfach. Nach dem Einpreßvorgang ergibt sich eine dauerhafte Flächenpressung zwischen der Trommel und dem Lüfterrad, die zu einem guten Wärmeübergang beiträgt.

In vorteilhafter Weiterbildung sind Mittel zum statischen Andrücken des Fliehkörpers an die Umfangswand der Trommel vorgesehen. Ein statisches Andrücken bedeutet hier, daß der Fliehkörper auch ohne dynamische Einwirkungen wie eine drehzahlbedingte Fliehkraft in reibender Wechselwirkung zur Umfangswand der Trommel steht. Ein sicheres und selbsttätiges Anlaufen des Werkzeuges aus dem Stillstand heraus ist sichergestellt.

In einer vorteilhaften Ausführung sind die Mittel zum statischen Andrücken des Fliehkörpers durch eine derartige räumliche Anordnung des Überlastschutzes gebildet, daß eine Drehachse des Überlastschutzes bezogen auf die gewöhnliche Arbeitshaltung der Werkzeugmaschine im wesentlichen horizontal liegt. Insbesondere bei einer Anordnung mit zwei oder mehr Fliehkörpern führt die horizontale Lage der Drehachse dazu, daß unabhängig von der Drehwinkellage mindestens ein Fliehgewicht derart räumlich positioniert ist, daß es unter Einwirkung der Schwerkraft selbsttätig in eine ausgelenkte Lage wandert. In der ausgelenkten Lage steht es infolge der Schwerkraft als Anpreßkraft in Reibschluß mit der Umfangswand der Trommel. Alternativ oder zusätzlich kann es zweckmäßig sein, die Mittel zum statischen Andrücken durch eine Feder, insbesondere eine Druckfeder auszubilden, wodurch die Arbeitshaltung der Werkzeugmaschine in ihrer räumlichen Lage nicht auf die zuvor beschriebene horizontale Lage eingeschränkt ist. Mit einfachen Mitteln ist ein Anfangsreibschluß innerhalb des Überlastschutzes gewährleistet, der beim Starten des Elektromotors eine Mitnahme der Werkzeugwelle aus dem Stand heraus sicherstellt.

Vorteilhaft kann zusätzlich oder alternativ ein radial innerer Anschlag des Fliehkörpers vorgesehen sein, wobei ein radial äußerer Reibbelag des Fliehkörpers mittels des Anschlages gegen die Umfangswand gedrückt wird. Es werden sich die elastischen Materialeigenschaften des Reibbelages zunutze gemacht. Dieser ist in Elastizität und Form so bemessen, daß er in Ruhe mit leichter Klemmwirkung an der Trommel anliegt. Die leichte Klemmwirkung bewirkt einerseits ein sicheres Startverhalten und erlaubt andererseits im Blockierungsfalle des Werkzeuges ein ruckfreies Durchrutschen.

In einer vorteilhaften Ausführung ist ein Trägerkörper mit einem Lagerschenkel vorgesehen, wobei der Fliehkörper zwei gabelförmig den Lagerschenkel umgreifende Halteschenkel aufweist. Der Lagerschenkel und die Halteschenkel sind von einem Gelenkzapfen durchgriffen. Es ist eine symmetrische, zweiseitige Schwenklagerung des Fliehkörpers gebildet, die im wesentlichen frei von Verkantungserscheinungen ist. Die seitlichen Gleitflächen zwischen dem Lagerschenkel und den Halteschenkeln bewirken eine zusätzliche Führung. Die vorgesehene Ausrichtung des Fliehgewichtes bleibt auch unter hohen Betriebslasten erhalten. Bei gegebener Baugröße ist ein höheres übertragbares Drehmoment bei verringertem Verschleiß erzielbar.

Bei einer gelenkigen Lagerung weist der Fliehkörper zweckmäßig an seinem freien, schwenkbaren Ende formschlüssige Führungsmittel auf. Zusätzlich zur Führung am Schwenklager ist eine führende Lagefixierung des Fliehkörpers auch an seinem gegenüberliegenden freien Ende gegeben. Die Lagegenauigkeit des Fliehkörpers relativ zur Trommel ist weiter verbessert.

In vorteilhafter Ausbildung ist der Fliehkörper an einem Schwenklager gelenkig gelagert, wobei sein freies Ende ausgehend vom Schwenklager in eine Betriebsdrehrichtung der Trommel weist. Es ist eine sogenannte nachlaufende Anordnung des Fliehkörpers gebildet. Die Drehung der Trommel in ihrer Betriebsdrehrichtung führt über den Reibkontakt mit dem Fliehkörper nicht zu einer Selbsthemmung. Vielmehr weist die Reibkraft am Fliehkörper eine Kraftkomponente bezogen auf das Schwenklager auf, die in der Schwenkrichtung nach innen gerichtet ist. Im gewöhnlichen Betrieb wird diese nach innen gerichtete Kraftkomponente durch die nach außen weisende Fliehkraft derart kompensiert, daß die Fliehkraft überwiegt. Für gewöhnliche Betriebslasten im mittleren und oberen Drehzahlbereich entsteht ein hinreichender, schlupffreier Reibschluß. Sobald jedoch infolge eines unerwartet erhöhten Schneidwiderstandes die Drehzahl plötzlich oder allmählich unter einen konstruktiv vorgegebenen Wert absinkt, führt die nachlaufende Anordnung des Fliehkörpers zur Unterbrechung des Reibschlusses. Mit einsetzendem Schlupf zwischen Trommel und Fliehkörper wird der Kraftfluß innerhalb des Überlastschutzes schlagartig unterbrochen. Die Reaktionszeit des Überlastschutzes auf ein Blockieren des Werkzeuges ist äußerst gering. In Verbindung mit der Anordnung des Überlastschutzes auf der schnelldrehenden Antriebsseite des Untersetzungsgetriebes ist diese Reaktionszeit bzw. ein zugeordneter Reaktionsdrehwinkel des Schneidwerkzeuges weiter verringert.

Als zusätzlicher Vorteil konnte beobachtet werden, daß in Gegendrehrichtung Selbsthemmung eintritt. Dieser Effekt kann bei einer Werkzeugmaschine beispielsweise in Form eines Elektroschraubers genutzt werden. Beim Einschrauben einer Schraube arbeitet der Überlastschutz wie zuvor beschrieben. Beim Ausdrehen einer festsitzenden Schraube, also bei gegenteiliger Drehrichtung, sind u.U. erhöhte Arbeitsdrehmomente erforderlich, die in Folge der Selbsthemmung ohne weiteres übertragen werden können.

In zweckmäßiger Weiterbildung ist der Antriebsstrang in seinem Abschnitt zwischen dem Überlastschutz und dem Getriebe durch einen kurzen Wellenstummel gebildet, der mit insgesamt einem Wälzlager gelagert ist, wobei das Wälzlager zwischen dem Trägerkörper mit dem Fliehkörper und einem Eingangsritzel des Getriebes gehalten ist. Unter Beibehaltung der Kupplungsanordnung auf der Motorseite des Getriebes sind durch die kurze Ausführung des Wellenstummels die frei drehenden und im Blockierungsfalle abzubremsenden Massen minimiert. Die Lagerung des Wellenstummels mit nur einem Wälzlager erleichtert den Ausgleich von Lagetoleranzen zwischen Antriebs- und Abtriebsseite des Überlastschutzes ohne zusätzliche Zentriermittel innerhalb des Überlastschutzes. Gleichzeitig kann der Überlastschutz als Führungsmittel für den Wellenstummel dienen. Der Wellenstummel ist neben dem Wälzlager auch am Ort des Überlastschutzes gestützt. Es ergibt sich eine steife, hochbelastbare Lagerung des Eingangsritzels mit exakter Lagejustierung relativ zu einem angeschlossenen Ausgangszahnrad beispielsweise in Form eines Tellerrades.

In einer vorteilhaften Ausführung ist die Werkzeugmaschine mit einem Getriebe versehen, wobei der Überlastschutz im Antriebsstrang zwischen dem Elektromotor und dem Getriebe angeordnet ist. Das Getriebe ist insbesondere als Untersetzungsgetriebe ausgeführt, welches auf seiner Werkzeugseite eine niedrigere Drehzahl aufweist als auf seiner Motorseite. Die motorseitige Anordnung des Überlastschutzes bewirkt, daß der Überlastschutz mit einer sehr hohen Arbeitsdrehzahl betrieben wird. Es wird sich der quadratische Zusammenhang zwischen Fliehkraft und Drehzahl zunutze gemacht. Auf das Fliehgewicht wirkt im Betrieb eine sehr hohe Fliehkraft. Da bei gegebener Antriebsleistung das zu übertragende Drehmoment umgekehrt proportional zur Drehzahl ist, wirkt an dem Überlastschutz auf der Motorseite des Untersetzungsgetriebes ein entsprechend geringes Antriebsmoment. In der Folge kann der Überlastschutz mit dem Fliehgewicht insgesamt sehr klein und leichtgewichtig ausgeführt sein. Es ist kein oder allenfalls ein nur geringer zusätzlicher Bauraum erforderlich.

Im Zusammenhang mit einer Blockiereinrichtung für die Werkzeugspindel der Werkzeugmaschine trägt die erfindungsgemäße Anordnung des Überlastschutzes zur Betriebssicherheit bei. Beispielsweise für einen Werkzeugwechsel kann die Werkzeugspindel blockiert werden. Ein gleichzeitiges versehentliches Anlaufen des Elektromotors führt dazu, daß lediglich die motorseitige Trommel in Drehung versetzt wird. Der abtriebsseitige, durch die Blockiereinrichtung festgestellte Trägerkörper mit dem Fliehgewicht bewirkt infolge des Fehlens einer Eigenrotation allenfalls einen nur geringen Reibschluß mit der Trommel. Der versehentlich anlaufende motorseitige Antriebsstrang ist vor Beschädigungen, Überhitzung oder dgl. geschützt.

Ein Ausführungsbeispiel der Erfindung ist im folgenden anhand der Zeichnung näher beschrieben. Es zeigen:
- Fig. 1: in einem ausschnittsweise dargestellten Längsschnitt eine Werkzeugmaschine am Beispiel eines Winkelschleifers mit einem in der horizontal liegenden Antriebswelle angeordneten Überlastschutz;
- Fig. 2: in perspektivischer Ansicht den abtriebsseitigen Trägerkörper des Überlastschutzes nach Fig. 1 mit zwei schwenkbar gelagerten Fliehkörpern;
- Fig. 3: eine Explosionsdarstellung der Anordnung nach Fig. 2 mit Einzelheiten zur geführten Schwenklagerung der Fliehkörper;
- Fig. 4: eine Explosionsdarstellung des Überlastschutzes vom Winkelschleifer nach Fig. 1;
- Fig. 5: einen Längsschnitt durch das Lüfterrad nach den Fig. 1 und 4 mit Einzelheiten der integrierten Kupplungstrommel;
- Fig. 6: eine Variante der Anordnung nach den Fig. 2 und 3 mit einem einteiligen Wellenstummel und mit federvorgespannten Fliehkörpern;

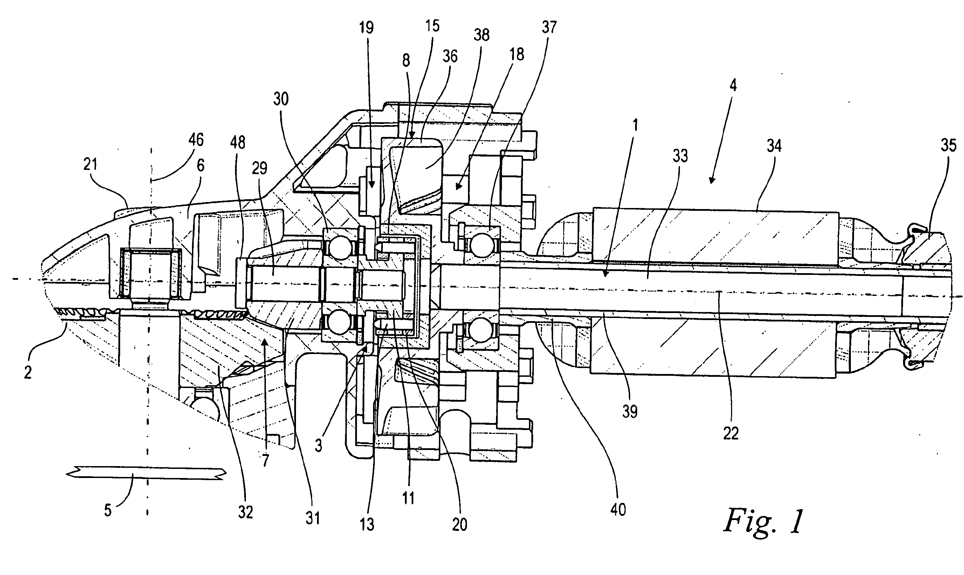

Fig. 1 zeigt ausschnittsweise eine Längsschnittdarstellung durch eine elektrisch angetriebene Werkzeugmaschine am Beispiel eines Winkelschleifers. Es können auch andere Werkzeugmaschinen wie Bohrmaschinen, Handkreissägen oder dgl. vorgesehen sein. Ein angedeutetes Werkzeug 5 in Form einer Trennscheibe ist auf einer Werkzeugspindel 2 montiert. Die Werkzeugspindel 2 ist in einem Gehäuse 6 des Winkelschleifers um eine Drehachse 46 drehbar gelagert. Ein Zahnrad in Form eines Tellerrades 32 ist drehfest mit der Werkzeugspindel 2 verbunden. Im Gehäuse 6 ist eine angedeutete Blockiereinrichtung 21 vorgesehen, die beim Niederdrücken formschlüssig in das Tellerrad 32 eingreift und dabei beispielsweise für einen Wechsel des Werkzeuges 5 die Werkzeugspindel 2 in Drehrichtung blockiert.

Zum Antrieb der Werkzeugspindel 2 bzw. des Werkzeuges 5 ist ein Elektromotor 4 vorgesehen, von dem der besseren Übersichtlichkeit halber nur der Bereich eines Ankers 34 mit einem rückwärtigen Kollektor 35 dargestellt ist. Es kann auch ein Hydraulik-, Pneumatik- oder Verbrennungsmotor zweckmäßig sein. Bevorzugt ist ein Antrieb gewählt, der aus dem Stand heraus, also ohne Leerlaufdrehzahl betrieben werden kann, so daß eine zwischengeschaltete Fliehkraftkupplung nicht erforderlich ist. Der Anker 34 und der Kollektor 35 sind drehfest auf einer Motorwelle 33 montiert. Zwischen dem Anker 34 und der Motorwelle 33 ist ein Isolierrohr 39 für eine elektrische Isolierung angeordnet. Auf dem der Werkzeugspindel 2 zugewandten Ende der Motorwelle 33 ist außenseitig auf das Isolierrohr 39 aufdoppelnd noch eine Isolierhülse 40 aufgeschoben.

Im Bereich des dem Kollektor 35 gegenüberliegenden Endes schließt sich stirnseitig an das Isolierrohr 39 bzw. an die Isolierhülse 40 ein Wälzlager 37 und ein Gebläserad 36 an. Das Gebläserad 36 ist auf das Ende der Motorwelle 33 aufgeschraubt und klemmt den Innenring des Wälzlagers 37 gegen das Isolierrohr 39 und die Isolierhülse 40. Der Außenring des Wälzlagers 37 ist in einem getrennt vom Gehäuse 3 ausgeführten und mit diesem verschraubten Motorgehäuse gelagert. Eine glockenförmige Trommel 8 ist mittig und koaxial in das Gebläserad 36 integriert.

Das Gebläserad 36 mit radial außenseitigen Lüfterflügeln 38 ist Teil eines Radialgebläses, mit dem Kühlluft axial über den Kollektor 35 und den Anker 34 hinweg gesaugt und anschließend radial nach außen geblasen wird. Gleichzeitig bildet das Gebläserad 36 auch ein Lüfterrad 15 zur Kühlung der integrierten Trommel 8. Es kann auch eine Ausführung als Axialgebläse zweckmäßig sein.

Die vorgenannten Teile bilden zusammen eine Wellenbaugruppe, die mittels des gezeigten Wälzlagers 37 sowie eines weiteren, nicht gezeigten Wälzlagers im Bereich des Kollektors 35 drehbar gelagert ist.

Achsgleich zur Motorwelle 33 ist auf der der Trommel 8 zugeordneten Stirnseite ein kurzer, getrennt ausgeführter Wellenstummel 29 mittels eines einzelnen Wälzlagers 30 in Form eines Kugellagers im Gehäuse 6 gelagert. Auf einem in die Trommel 8 ragenden Stirnende des Wellenstummels 29 ist ein Trägerkörper 11 aufgeschraubt, der das Wälzlager 30 und ein gegenüberliegend angrenzendes Eingangsritzel 31 gegen einen stirnseitigen Bund 48 des Wellenstummels 29 verspannt.

An dem Trägerkörper 11 sind Fliehkörper 20 mittels Gelenkzapfen 13 schwenkbar gelagert. Die Fliehkörper 20 schwenken unter Einwirkung der Fliehkraft radial nach außen gegen die Trommel 8, wodurch ein Überlastschutz 3 gebildet ist.

Die Motorwelle 33, der Wellenstummel 29 und der Überlastschutz 3 bilden zusammen eine Antriebswelle 1, die das Eingangsritzel 31 antreibt. Das Eingangsritzel 31 ist im gezeigten Ausführungsbeispiel als Kegelritzel ausgeführt, welches mit der Verzahnung des Tellerrades 32 in Eingriff steht. Es ist ein Getriebe 7 gebildet, welches im gezeigten Ausführungsbeispiel als Kegelradgetriebe ausgeführt ist. Es kann auch ein Stirnradgetriebe beispielsweise in Form eines Planetengetriebes zweckmäßig sein. Das Eingangsritzel 31 weist einen geringeren Durchmesser mit geringerer Zähnezahl auf als das Tellerrad 32. Das Getriebe 7 ist damit ein Untersetzungsgetriebe, bei dem die Werkzeugspindel 2 im Vergleich zur Antriebswelle 1 eine geringere Drehzahl mit höherem Drehmoment aufweist. In der gezeigten Ausführung des Getriebes 7 als Winkel- bzw. Kegelradgetriebe liegt die Drehachse 46 der Werkzeugspindel 2 senkrecht zur Drehachse 22 der Antriebswelle 1.

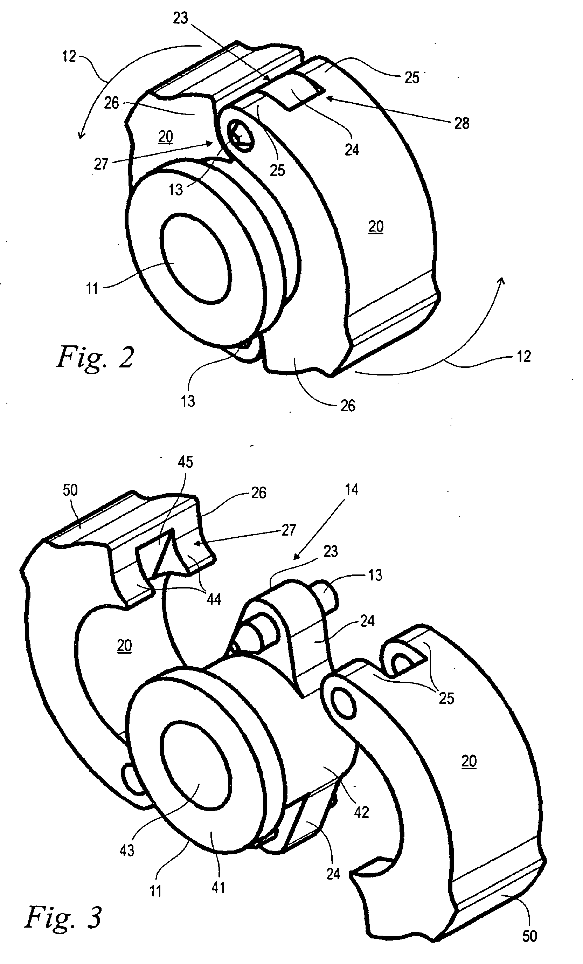

Der Winkelschleifer nach Fig. 1 ist etwa in seiner gewöhnlichen Arbeitshaltung gezeigt, bei der die Drehachse 22 der Antriebswelle 1 etwa horizontal liegt. Der Überlastschutz 3 liegt im Antriebstrang des Winkelschleifers derart zwischen dem Getriebe 7 und dem das Werkzeug 5 antreibenden Elektromotor 4, daß sie sich gemeinsam mit der Antriebswelle 1 um die gleiche, im wesentlichen horizontal liegende Drehachse 22 dreht. Die Gelenkzapfen 13 sind mit radialem Abstand und achsparallel zur Drehachse 22 angeordnet, wodurch achsparallele, ebenfalls im wesentlichen horizontal liegende Schwenkachsen für die Fliehkörper 20 gebildet sind. Die Fliehkörper 20 sind auf einer werkzeugseitigen Abtriebsseite 19 mittels der Gelenkzapfen 13 und dem Trägerkörper 11 am Wellenstummel 29 befestigt. Die Trommel 8 ist auf einer vom Elektromotor 4 angetriebenen Seite 18 an der Motorwelle 33 befestigt. Im gewöhnlichen Betrieb liegen die Fliehkörper 20 innenseitig reibschlüssig an der Trommel 8 an und stellen eine drehfeste Verbindung zwischen der Motorwelle 33 und dem Wellenstummel 29 her. Weitere Einzelheiten zur Funktionsweise des Überlastschutzes 3 sind weiter unten im Zusammenhang mit den Fig. 2 bis 5 beschrieben.

Durch den Eingriff des Trägerkörpers 11 mit den Fliehkörpern 20 in die Trommel 8 entsteht in diesem Bereich eine Selbstzentrierung des Wellenstummels 29 gegenüber der Motorwelle 33. Der Wellenstummel 29 ist außer am Ort seines Wälzlagers 30 noch mit axialem Abstand dazu in der Trommel 8 gestützt.

Fig. 2 zeigt in einer perspektivischen Ansicht eine vergrößerte Darstellung der Baugruppe aus dem Trägerkörper 11 mit den daran gehaltenen Fliehkörpern 20. Es sind bevorzugt zwei Fliehkörper 20 vorgesehen. Es kann auch eine abweichende Anzahl zweckmäßig sein.

Am Trägerkörper 11 sind zwei sich gegenüberliegende, radial nach außen stehende Lagerschenkel 24 angeformt, von denen in der gezeigten perspektivischen Darstellung nur ein Lagerschenkel 24 zu sehen ist. Der weitere Lagerschenkel 24 ist in Fig. 3 dargestellt. Die beiden Fliehkörper 20 weisen an jeweils einem Ende zwei gabelförmig angeordnete Halteschenkel 25 auf, die beidseitig den zugeordneten Lagerschenkel 24 umgreifen. Der jeweilig zugeordnete Gelenkzapfen 13 ist durch die Lagerschenkel 24 und den Halteschenkel 25 hindurchgeführt. Er ist mit dem Lagerschenkel 24 verpreßt, während die beiden Halteschenkel 25 auf dem jeweiligen Gelenkzapfen 13 gleiten. Es ist dadurch jeweils ein Schwenklager 28 für die Fliehkörper 20 gebildet. Bei einer Drehbewegung der gezeigten Anordnung und der daraus sich einstellenden Fliehkraft können die Fliehkörper 20 in einer durch einen Pfeil 12 angedeuteten Schwenkrichtung um den jeweils zugeordneten Gelenkzapfen 13 als Schwenkachse radial nach außen schwenken.

In der gezeigten Darstellung der Ruheposition ohne radiale Auslenkung der Fliehkörper 20 liegt ein jeweils freies Ende 26 an einem Anschlag 23 an, der die Schwenkbewegung der Fliehkörper 20 radial nach innen begrenzt. Der Anschlag 23 ist im gezeigten Ausführungsbeispiel durch den Lagerschenkel 24 des benachbarten Fliehkörpers 20 gebildet, kann aber auch durch andere Komponenten des Trägerkörpers 11 oder des angrenzenden Fliehkörpers 20 gebildet sein. Am freien Ende 26 sind noch formschlüssige Führungsmittel 27 vorgesehen, die im Zusammenhang mit Fig. 3 näher beschrieben sind.

Eine Explosionsdarstellung der Anordnung nach Fig. 2 ist in Fig. 3 gezeigt, demnach der Trägerkörper 11 auf seiner dem Wälzlager 30 (Fig. 1) zugewandten Seite einen einteilig angeformten Flansch 41 trägt. Von einem Grundkörper 42 des Trägerkörpers 11 ragen insgesamt zwei sich gegenüberliegende Lagerschenkel 24 radial hervor. Die Anzahl der Lagerschenkel 24 entspricht der gewählten Anzahl der Fliehkörper 20. In jeden der beiden Lagerschenkel 24 ist je ein Gelenkzapfen 13 eingepreßt. Innenseitig ist der Trägerkörper 11 mit einer Gewindebohrung 43 versehen, mittels derer er auf den Wellenstummel 29 nach Fig. 1 aufgeschraubt ist.

Die Lagerschenkel 24 und die Halteschenkel 25 sind mit parallel zueinander liegenden und flächig angrenzenden Seitenwänden versehen, wodurch sich zusätzlich zur Führung am Gelenkzapfen 13 eine Seitenführung der Fliehkörper 20 ergibt. Radial innen ist das freie, schwenkbare Ende 26 des Fliehkörpers 20 derart ausgeformt, daß eine mittige Aussparung 45 gabelförmig von zwei seitlichen Vorsprüngen 44 begrenzt ist. Im montierten Zustand greifen die gabelförmigen Vorsprünge 44 unter die Halteschenkel 25 des benachbarten Fliehkörpers 20 sowie seitlich neben den zugeordneten, trägerfesten Lagerschenkel 24. Es sind dadurch die formschlüssigen Führungsmittel 27 für das freie Ende 26 gebildet, die eine Schwenkbewegung in der Schwenkrichtung 12 (Fig. 2) erlauben, ohne eine ungewünschte Auslenkung in einer anderen Richtung zuzulassen.

Außenseitig der Fliehkörper 20 sind jeweils ein radial hervorstehender Reibvorsprung 50 angeordnet. Die beiden Reibvorsprünge können separate Einzelteile beispielsweise aus einem Kupplungs- bzw. Bremsmaterial sein und sind im gezeigten Ausführungsbeispiel einteilig mit dem metallischen Fliehkörper 20 ausgebildet.

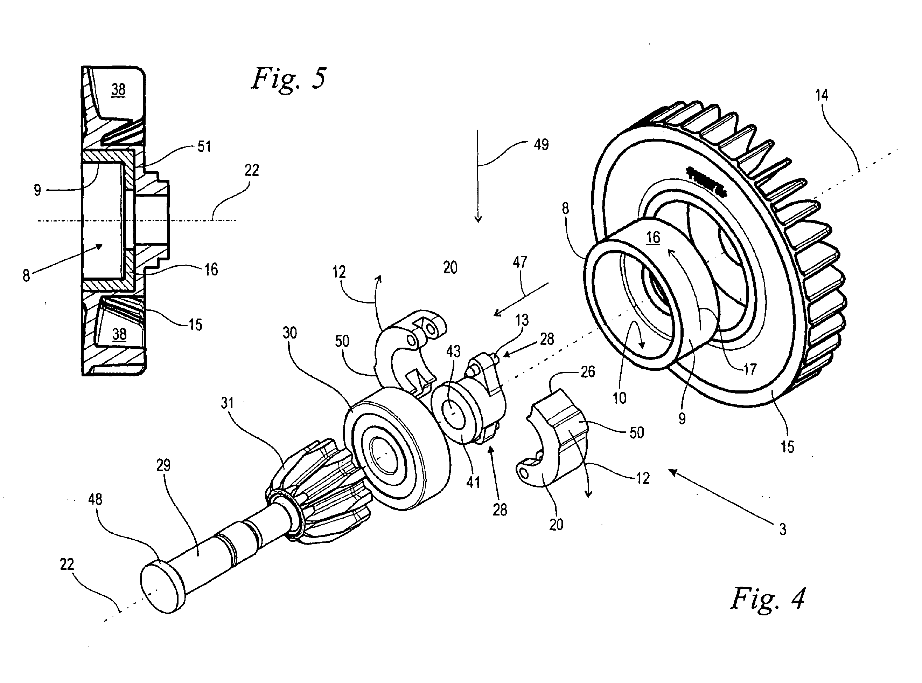

Fig. 4 zeigt in perspektivischer Explosionsdarstellung die Baugruppe des Überlastschutzes 3 mit dem Wellenstummel 29, dem Eingangsritzel 31, dem Wälzlager 30, dem Trägerkörper 11, den Fliehkörpern 20, der Trommel 8 und dem Lüfterrad 15. Im montierten Zustand ist die in das Lüfterrad koaxial integrierte Trommel 8 in Richtung eines Pfeiles 47 derart auf die Anordnung der Fliehkörper 20 aufgeschoben, daß die Fliehkörper 20 von der Umfangswand 9 der Trommel 8 umgriffen sind. Die Trommel 8 besteht im gezeigten Ausführungsbeispiel aus einem Sinter-Bremsmaterial 16, welches im Vergleich zum Stahl oder Leichtmetall der Fliehkörper 20 eine erhöhte Elastizität aufweist. Das Bremsmaterial 16 kann auch ein Elastomer, Duroplast oder dgl. sein.

Der Trägerkörper 11 ist derart auf den Wellenstummel 29 mit seiner Gewindebohrung 43 aufgeschraubt, daß der Flansch 41 den Innenring des Wälzlagers 30 im direkten Kontakt gegen das Eingangsritzel 31 drückt. Der Innenring des Wälzlagers 30 und das Eingangsritzel 31 sind klemmend zwischen dem Flansch 41 und dem Bund 48 gehalten.

Die Baueinheit aus Trommel 8 und Lüfterrad 15 wird im Betrieb seitens des Elektromotors 4 (Fig. 1) in einer durch einen Pfeil 17 angedeuteten Betriebsdrehrichtung gedreht. Bezogen auf die Betriebsdrehrichtung 17 sind die beiden Fliehkörper 20 an dem jeweiligen Schwenklager 28 derart gelenkig gelagert, daß die freien Enden 26 der Fliehkörper 20 ausgehend vom Schwenklager 28 in die Betriebsdrehrichtung 17 weisen. Dies entspricht einer sogenannten nachlaufenden Anordnung der Fliehkörper 20, demnach ihre Schwenkrichtung 12 der Betriebsdrehrichtung 17 entgegengesetzt ist.

Die Drehachse 22 der gezeigten Anordnung liegt in der gewöhnlichen Betriebshaltung des Winkelschleifers nach Fig. 1 etwa horizontal oder zumindest in einem deutlichen Winkel zu einer durch einen Pfeil 49 angedeuteten Gewichtskraftrichtung. In Verbindung mit der Anordnung von insgesamt mindestens zwei Fliehkörpern 20 bedeutet dies, daß zumindest einer der Fliehkörper 20 infolge seiner Gewichtskraft nach außen in der Schwenkrichtung 12 geschwenkt wird und dabei mit seinem jeweiligen Reibvorsprung 50 an einer inneren Oberfläche 10 der Trommel 8 bzw. ihrer Umfangswand 9 anliegt. Diese gewichtskraftbedingte Anlage liegt auch im Ruhezustand bzw. im blockierten Drehstillstand des Wellenstummels 29 vor. Der entsprechende Fliehkörper 20 ist statisch, also ohne Einwirkung dynamischer Effekte wie Fliehkraft oder dgl. an die Umfangswand 9 der Trommel 8 angedrückt. Die im wesentlichen horizontale Anordnung der Drehachse 22 und der Schwenklager 28 bilden damit Mittel 14 zum statischen Andrücken des jeweiligen Fliehkörpers 20.

Durch das im Zusammenhang mit Fig. 3 beschriebene Zusammenwirken der Anschläge 23 mit den benachbarten Fliehkörpern 20 in Verbindung mit einem unter leichter radialer Vorspannung vorgenommenen Eingriff der Fliehkörper 20 in die Trommel 8 sind weitere Mittel 14 zum statischen Andrücken der Fliehkörper 20 an die Umfangswand 9 gebildet.

Die im Zusammenhang mit Fig. 3 beschriebenen Anschläge 23 bewirken in Verbindung mit einer gewissen radialen Elastizität des Bremsmaterials 16 der Trommel 8 und einem abgestimmten Durchmesser der Umfangswand 9 eine geringe statische Vorspannung der Fliehkörper 20 in radialer Richtung gegen die innere Oberfläche 10 der Umfangswand 9. Ohne Eigendrehung des Wellenstummels 9 liegt bereits ein geringer Reibschluß innerhalb des Überlastschutzes 3 vor, der beim Anlaufen der Trommel 8 für eine Mitnahme des Wellenstummels 29 und damit des Werkzeuges 5 (Fig. 1) ausreicht. Es sind dadurch weitere Mittel 14 zum statischen Andrücken des jeweiligen Fliehkörpers 20 an die Umfangswand 9 der Trommel 8 gebildet.

Die hier beschriebenen Mittel 14 zum statischen Andrücken der Fliehkörper 20 infolge ihrer räumlichen Ausrichtung und der radialen Vorspannung wirken im gezeigten Ausführungsbeispiel gemeinsam. Es kann auch zweckmäßig sein, alternativ eine der beiden Mittel 14 vorzusehen.

Das Lüfterrad 15 und die Trommel 8 der Anordnung nach Fig. 4 sind im montierten Zustand als Längsschnittdarstellung in Fig. 5 gezeigt. Die Trommel 8 und das Lüfterrad 15 sind rotationssymmetrische Bauteile und koaxial zueinander bezogen auf die gemeinsame Drehachse 22 angeordnet.

Die Trommel 8 besteht aus einer zylindrischen Umfangswand 9 sowie einer stirnseitig sich daran anschließenden, kreisscheibenförmigen Stirnwand 51. Die Umfangswand 9 und die Stirnwand 51 sind einteilig aus dem Bremsmaterial 16 gefertigt. Die Trommel 8 aus dem Bremsmaterial 16 ist in eine entsprechend geformte Ausnehmung des Lüfterrades 15 unter radialer Vorspannung eingepreßt. Es kann auch eine Ausführung zweckmäßig sein, bei der die Trommel 8 ein beispielsweise metallisches Bauteil ist, an dessen Innenseite der Umfangswand 9 ein kreisringförmiger Reibbelag aus dem Bremsmaterial 16 aufgebracht ist. Bei der im Zusammenhang mit Fig. 3 beschriebenen optionalen Ausführung mit Reibvorsprüngen 50 aus einem Reibmaterial kann auf eine Auskleidung der Trommel 8 mit dem Bremsmaterial 16 verzichtet werden. Die Trommel 8 kann dabei einteilig mit dem Lüfterrad 15 ausgeführt sein, indem beispielsweise eine entsprechend geformte zylindrische Ausnehmung in das Lüfterrad 15 eingearbeitet ist. Es kann auch eine metallische Reibung zwischen den Fliehkörpern 20 (Fig. 4) und der Umfangswand 9 der Trommel 8 in Betracht kommen.

Das Lüfterrad 15 mit den radial außenseitigen Lüfterflügeln 38 ist einteilig aus Magnesiumdruckguß gefertigt. Es können auch andere metallische Werkstoffe eingesetzt werden, wobei Leichtmetalle mit hoher Wärmeleitfähigkeit wie beispielsweise Aluminium bevorzugt sind. Auch andere Werkstoffe mit hoher Wärmeleitfähigkeit, wie entsprechend eingestellte Thermo- oder Duroplaste können zweckmäßig sein. Die Trommel 8 ist derart in die Nabe des Lüfterrades 15 integriert, daß die Lüfterflügel 38 im wesentlichen umfangsseitig bzw. radial außenseitig der Umfangswand 9 angeordnet sind. Es kann auch ein axialer Versatz der Lüfterflügel 38 relativ zur Umfangswand 9 in Betracht kommen.

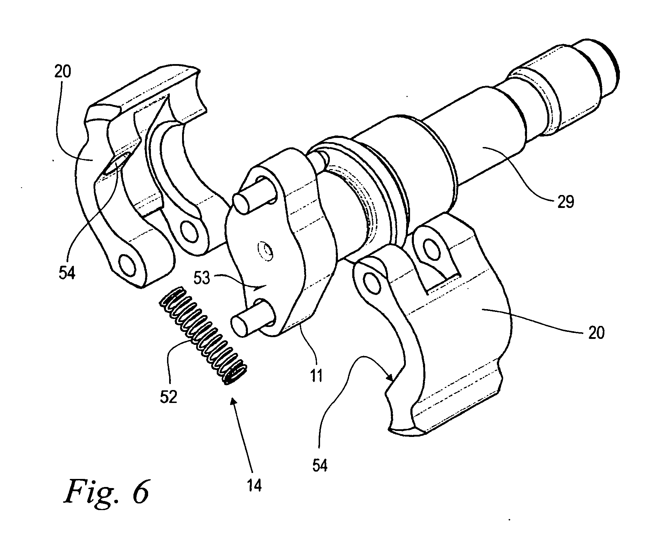

Eine alternative Ausführungsform der Anordnung nach den Fig. 2 und 3 ist in Fig. 6 gezeigt. Der Trägerkörper 11 und der Wellenstummel 29 sind einteilig ausgeführt. Die beiden Fliehkörper 20 sind im Bereich einer Stirnseite 53 des Trägerkörpers 11 inneseitig mit einem Sackloch 54 versehen. Eine Druckfeder 52 ist an seinen beiden Enden in je einem Sackloch 54 des jeweiligen Fliehkörpers 20 gehalten. Die Druckfeder 52 verläuft diagonal entlang der Stirnseite 53. Unter Einwirkung einer Druckvorspannung der Druckfeder 52 drücken sich die beiden Fliehkörper 20 gegenseitig nach außen, wodurch unabhängig von der räumlichen Winkellage der Werkzeugmaschine Mittel 14 zum statischen Andrücken der Fliehkörper 20 gebildet sind. In den übrigen Merkmalen und Bezugszeichen stimmt die hier gezeigte Anordnung mit der nach den Fig. 2 und 3 überein.

Unter gleichzeitigem Bezug auf die Fig. 1 und 4 ergibt sich die Funktionsweise der Werkzeugmaschine mit dem Überlastschutz 3 wie folgt. Für die Inbetriebnahme der Werkzeugmaschine wird der Elektromotor 4 gestartet, wobei sich die Motorwelle 33 zusammen mit der drehfest montierten Trommel 8 in der Betriebsdrehrichtung 17 in Bewegung setzt. Die zunächst ruhende Baugruppe auf der Abtriebsseite 19 des Überlastschutzes 3 wird ohne die Einwirkung von Fliehkräften in Drehung versetzt, indem die Trommel 8 über einen Reibschluß mit den statisch vorgespannt angedrückten Reibbelägen 16 die abtriebsseitige Baugruppe des Überlastschutzes 3 mitnimmt. Beim Beschleunigen des Werkzeuges 5 aus dem Stillstand liegen zunächst noch keine äußeren Lasten an. Innerhalb des Überlastschutzes 3 ist lediglich ein zur Drehbeschleunigung erforderliches Drehmoment zu übertragen. Zu Beginn des Drehbeschleunigungsvorganges bei noch geringen Drehzahlen liegen nur geringfügige Fliehkräfte an den Fliehkörpern 20 an. Die auf die Reibbeläge 16 wirkenden Reibkräfte wirken in der Betriebsdrehrichtung 17.

Neben einer Mitnahme der Fliehkörper 20 führt dies zu einer Kraftbeaufschlagung der Fliehkörper 20 mit einer Kraftkomponente, die entgegen der Schwenkrichtung 12 wirkt. Diese den Reibschluß lösende Kraftkomponente wird durch die oben beschriebenen Mittel 14 zum statischen Andrücken der Fliehkörper 20 derart kompensiert, daß ein für den Beschleunigungsvorgang hinreichender Reibschluß zwischen den Reibbelägen 16 und der Trommel 8 bestehen bleibt.

Mit steigender Drehzahl bauen sich Fliehkräfte an den Fliehkörpern 20 auf, die die Andrückkraft und damit den Reibschluß zwischen den Reibbelägen 16 und der Trommel 8 steigern. Die gezeigte Anordnung ist so aufeinander abgestimmt, daß innerhalb eines vorgesehenen Betriebsdrehzahlbereiches ein maximales Betriebsdrehmoment übertragen werden kann.

Sofern infolge eines zu groß gewählten Schnittvorschubes des Werkzeuges 5, eines zu hohen Anpreßdruckes oder beim Auftreffen auf ein Schneidhindernis die Drehzahl der Werkzeugspindel 2 und damit auch der Fliehkörper 20 unterhalb einer konstruktiv voreingestellten Grenzdrehzahl absinkt, sinkt auch der fliehkraftbedingte Reibschluß zwischen der Abtriebsseite 19 und der Antriebsseite 18. Das lastbedingte hohe Drehmoment bewirkt ein Durchrutschen zwischen den Fliehkörpern 20 und der Trommel 8. Die Durchrutschbewegung drückt die Fliehkörper 20 entgegen der Schwenkrichtung 12 nach innen, wodurch der Reibschluß zwischen Antriebsseite 18 und Abtriebsseite 19 fast vollständig aufgehoben wird. Die Baugruppe aus Elektromotor 4, Lüfterrad 15 und Trommel 8 kann ohne Blockieren weiter drehen.

Es verbleibt ein konstruktiv vorgegebener Reibschluß entsprechend der statischen Anpreßkraft der Fliehkörper 20. Dieser kann so bemessen werden, daß die im getrennten Zustand verbleibende Restlast den motorseitigen Antriebsstrang nicht beschädigt und eine sichere Führung der Werkzeugmaschine ermöglicht bleibt. Gleiches gilt auch für den Fall, bei dem die Werkzeugspindel 2 mittels der Blockiereinrichtung 29 für einen Werkzeugwechsel blockiert ist. Bei einem versehentlichen Anlaufen des Elektromotors 4 wird lediglich die Trommel 8 in Drehung versetzt, wobei die geringen Reibkräfte an der stillstehenden Abtriebsseite 19 zu keinerlei Beeinträchtigung des Elektromotors 4 führen.

Die Reibkräfte zwischen den in Drehrichtung blockierten Fliehkörpern 20 und der weiterdrehenden Trommel 8 erzeugen Reibungswärme, die durch die Trommel 8 in das Lüfterrad 15 abgeführt wird. Die Lüfterflügel 38 des Lüfterrades 15 wirken als Kühlrippen mit vergrößerter Oberfläche. Die große Oberfläche begünstigt eine Wärmeableitung zu dem das Lüfterrad durchstreichenden Luftstrom. Der Luftstrom weist zudem infolge der Gebläsewirkung des Lüfterrades 15 eine hohe Strömungsgeschwindigkeit auf, die zur verbesserten Wärmeableitung beiträgt. Eine Überhitzung des Überlastschutzes 3 ist zuverlässig vermieden.

Sobald die Ursache der Blockierung bzw. Überlastung des Werkzeuges 5 bzw. der Werkzeugspindel 2 beseitigt ist, kann die Anordnung wieder wie zuvor beschrieben hochdrehen.

## Patentansprüche

1. Elektrisch angetriebene Werkzeugmaschine wie ein Winkelschleifer oder dgl. mit einem Überlastschutz (3), der in einem Antriebsstrang zwischen einem Werkzeug (5) und einem das Werkzeug (5) antreibenden Elektromotor (4) angeordnet ist, wobei der Überlastschutz (3) auf seiner vom Elektromotor (4) angetriebenen Seite (18) eine Trommel (8) und auf seiner werkzeugseitigen Abtriebsseite (19) mindestens einen Fliehkörper (20) zur Anlage an einer Umfangswand (9) der Trommel (8) aufweist,
**dadurch gekennzeichnet, daß** die Trommel (8) in ein Lüfterrad (15) integriert ist, wobei Lüfterflügel (38) des Lüfterrades (15) radial außenseitig der Umfangswand (9) der Trommel (8) angeordnet sind.

2. Werkzeugmaschine nach Anspruch 1,
**dadurch gekennzeichnet, daß** das Lüfterrad (15) durch ein Gebläserad (36) des Elektromotors (4) gebildet ist.

3. Werkzeugmaschine nach Anspruch 1 oder 2,
**dadurch gekennzeichnet, daß** das Lüfterrad (15) aus einem Material hoher Wärmeleitfähigkeit wie Metall und insbesondere aus Magnesium gefertigt ist.

4. Werkzeugmaschine nach einem der Ansprüche 1 bis 3,
**dadurch gekennzeichnet, daß** ein Bremsmaterial (16) als Reibbelag an der Umfangswand (9) der Trommel (8) angeordnet ist.

5. Werkzeugmaschine nach Anspruch 4,
**dadurch gekennzeichnet, daß** zumindest die Umfangswand (9) der Trommel (8) und insbesondere die gesamte Trommel (8) aus dem Bremsmaterial (16) gefertigt ist.

6. Werkzeugmaschine nach Anspruch 4 oder 5,
**dadurch gekennzeichnet, daß** außenseitig des Fliehkörpers (20) ein radial hervorstehender Reibvorsprung (50) angeordnet und insbesondere einteilig mit dem Fliehkörper (20) ausgebildet ist.

7. Werkzeugmaschine nach einem der Ansprüche 1 bis 6,
**dadurch gekennzeichnet, daß** die Trommel (8) als Buchse in das Lüfterrad (15) eingepreßt ist.

8. Werkzeugmaschine nach einem der Ansprüche 1 bis 7,
**dadurch gekennzeichnet, daß** Mittel (14) zum statischen Andrücken des Fliehkörpers (20) an die Umfangswand (9) der Trommel (8) vorgesehen sind.

9. Werkzeugmaschine nach Anspruch 8,
**dadurch gekennzeichnet, daß** die Mittel (14) zum statischen Andrücken des Fliehkörpers (20) durch eine derartige räumliche Anordnung des Überlastschutzes (3) gebildet sind, daß eine Drehachse (22) des Überlastschutzes (3) bezogen auf die gewöhnliche Arbeitshaltung der Werkzeugmaschine im wesentlichen horizontal liegt.

10. Werkzeugmaschine nach Anspruch 8 oder 9,
**dadurch gekennzeichnet, daß** die Mittel (14) zum statischen Andrücken des Fliehkörpers (20) durch eine Druckfeder (52) gebildet sind.

11. Werkzeugmaschine nach einem der Ansprüche 1 bis 10,
**dadurch gekennzeichnet, daß** ein Trägerkörper (11) mit einem Lagerschenkel (24) vorgesehen ist, wobei der Fliehkörper (20) zwei gabelförmig den Lagerschenkel (24) umgreifende Halteschenkel (25) aufweist, und wobei der Lagerschenkel (24) und die Halteschenkel (25) von einem Gelenkzapfen (13) durchgriffen sind.

12. Werkzeugmaschine nach einem der Ansprüche 1 bis 11,
**dadurch gekennzeichnet, daß** der Fliehkörper (20) gelenkig gelagert ist und an seinem freien, schwenkbaren Ende (26) formschlüssige Führungsmittel (27) aufweist.

13. Werkzeugmaschine nach einem der Ansprüche 1 bis 12,
**dadurch gekennzeichnet, daß** der Fliehkörper (20) an einem Schwenklager (28) gelenkig gelagert ist, wobei sein freies Ende (26) ausgehend vom Schwenklager (28) in einer Betriebsdrehrichtung (17) der Trommel (8) weist.

14. Werkzeugmaschine nach einem der Ansprüche 1 bis 13,
**dadurch gekennzeichnet, daß** der Antriebsstrang in seinem Abschnitt zwischen dem Überlastschutz (3) und dem Getriebe (7) durch einen kurzen Wellenstummel (29) gebildet ist, der mit insgesamt einem Wälzlager (30) gelagert ist, wobei das Wälzlager (30) zwischen dem Trägerkörper (11) mit dem Fliehkörper (20) und einem Eingangsritzel (31) des Getriebes (7) gehalten ist.

15. Werkzeugmaschine nach einem der Ansprüche 1 bis 14,
**dadurch gekennzeichnet, daß** die Werkzeugmaschine ein Getriebe (7) aufweist, wobei der Überlastschutz (3) im Antriebsstrang zwischen dem Elektromotor (4) und dem Getriebe (7) angeordnet ist.

16. Werkzeugmaschine nach Anspruch 15,
**dadurch gekennzeichnet, daß** das Getriebe (7) ausgangsseitig eine Werkzeugspindel (2) sowie eine Blockiereinrichtung (21) für die Werkzeugspindel (2) aufweist.

## Claims

1. Electrically driven powertool such as an angle grinder or the like, with an overload protection device (3) arranged in a drivetrain between a tool (5) and an electric motor (4) that drives the tool (5), such that the overload protection device (3) comprises on its side (18) driven by the electric motor (4) a drum (8) and on its drive output side (19) associated with the tool at least one flywheel (20) which is in contact with a circumferential wall (9) of the drum (8),
**characterised in that** the drum (8) is integrated in a fanwheel (15) and fan blades (38) of the fanwheel (15) are arranged radially outside the circumferential wall (9) of the drum (8).

2. Powertool according to Claim 1,
**characterised in that** the fanwheel (15) is formed by a fan impeller (36) of the electric motor (4).

3. Powertool according to Claims 1 or 2,
**characterised in that** the fanwheel (15) is made of a material with high thermal conductivity, such as a metal and in particular magnesium.

4. Powertool according to any of Claims 1 to 3,
**characterised in that** a brake material (16) is fixed as a friction lining on the circumferential wall (9) of the drum (8).

5. Powertool according to Claim 4,
**characterised in that** at least the circumferential wall (9) of the drum (8) and in particular the entire drum (8) is made of the brake material (16).

6. Powertool according to Claims 4 or 5,
**characterised in that** arranged on the outside of the flywheel (20) is a radially extending friction projection (50), this being formed in particular integrally with the flywheel (20).

7. Powertool according to any of Claims 1 to 6,
**characterised in that** the drum (8) is press-fitted into the fanwheel (15) as a bush.

8. Powertool according to any of Claims 1 to 7,
**characterised in that** means (14) are provided for statically pressing the flywheel (20) onto the circumferential wall (9) of the drum (8).

9. Powertool according to Claim 8,
**characterised in that** the said means (14) for pressing on the flywheel (20) consist in a spatial arrangement of the overload protection device (3) such that relative to the normal, working position of the powertool, a rotation axis (22) of the overload protection device (3) is substantially horizontal.

10. Powertool according to Claims 8 or 9,
**characterised in that** the means (14) for statically pressing on the flywheel (20) consist of a compression spring (52).

11. Powertool according to any of Claims 1 to 10,
**characterised in that** a support (11) with a bearing arm (24) is provided, the flywheel (20) has two holding arms (25) that enclose the said bearing arm (24) like a fork, and a joint pin (13) passes through the said holding arms (25).

12. Powertool according to any of Claims 1 to 11,
**characterised in that** the flywheel (20) is mounted in an articulated manner and has form-enclosing guiding means (27) at its free end (26) that can pivot.

13. Powertool according to any of Claims 1 to 12,
**characterised in that** the flywheel (20) is mounted and articulated on a pivot bearing (28), such that starting from the said pivot bearing (28) its free end (26) extends in a rotation direction (17) of the drum (8) during operation.

14. Powertool according to any of Claims 1 to 13,
**characterised in that** in its section between the overload protection device (3) and the transmission (7), the drivetrain is formed by a short shaft stump (29) mounted by just one roller bearing (30), the said roller bearing (30) being held between the support (11) and an input pinion (31) of the transmission (7).

15. Powertool according to any of Claims 1 to 14,
**characterised in that** the powertool has a transmission (7) and the overload protection device (3) is arranged in the drivetrain between the electric motor (4) and the transmission (7).

16. Powertool according to Claim 15,
**characterised in that** on its output side the transmission (7) has a tool spindle (2) and a locking device (21) for the tool spindle (2).

## Revendications

1. Machine à entraînement électrique, telle qu'une meuleuse d'angle ou une machine similaire, avec une protection de surcharge (3) qui est disposée dans une transmission entre un outil (5) et un moteur électrique (4) qui entraîne l'outil (5), la protection de surcharge (3) comportant sur son côté (18) entraîné par le moteur électrique (4) un tambour (8), et sur son côté sortie (19) situé côté outil au moins un corps centrifuge (20) destiné à s'appliquer contre une paroi circonférentielle (9) du tambour (8),
**caractérisée en ce que** le tambour (8) est intégré dans une roue de ventilateur (15), des pales (38) de la roue de ventilateur (15) étant disposées radialement sur le côté extérieur de la paroi circonférentielle (9) du tambour (8).

2. Machine selon la revendication 1, **caractérisée en ce que** la roue de ventilateur (15) est formée par une roue de soufflante (36) du moteur électrique (4).

3. Machine selon la revendication 1 ou 2, **caractérisée en ce que** la roue de ventilateur (15) est fabriquée à partir d'un matériau à conductibilité thermique élevée, tel que du métal et en particulier du magnésium.

4. Machine selon l'une des revendications 1 à 3, **caractérisée en ce qu'**un matériau de freinage (16) est disposé comme garniture de friction sur la paroi circonférentielle (9) du tambour (8).

5. Machine selon la revendication 4, **caractérisée en ce que** la paroi circonférentielle (9), au moins, du tambour (8) et en particulier tout le tambour (8) est fabriqué à partir du matériau de freinage (16).

6. Machine selon la revendication 4 ou 5, **caractérisée en ce qu'**une saillie de friction (50) qui dépasse radialement est disposée sur le côté extérieur du corps centrifuge (20) et est réalisée en particulier d'une seule pièce avec le corps centrifuge (20).

7. Machine selon l'une des revendications 1 à 6, **caractérisée en ce que** le tambour (8) est enfoncé sous la forme d'un manchon dans la roue de ventilateur (15).

8. Machine selon l'une des revendications 1 à 7, **caractérisée en ce qu'**il est prévu des moyens (14) pour la compression statique du corps centrifuge (20) contre la paroi circonférentielle (9) du tambour (8).

9. Machine selon la revendication 8, **caractérisée en ce que** les moyens (14) pour la compression statique du corps centrifuge (20) sont formés par une disposition spatiale de la protection de surcharge (3) qui est telle qu'un axe de rotation (22) de la protection de surcharge (3) est sensiblement horizontal, par rapport à la position de travail habituelle de la machine.

10. Machine selon la revendication 8 ou 9, **caractérisée en ce que** les moyens (14) pour la compression statique du corps centrifuge (20) sont formés par un ressort de compression (52).

11. Machine selon l'une des revendications 1 à 10, **caractérisée en ce qu'**il est prévu un corps de support (11) avec une branche d'appui (24), le corps centrifuge (20) présentant deux branches de support (25) qui entourent la branche d'appui (24) à la manière d'une fourche, et la branche d'appui (24) et les branches de support (25) étant traversées par un axe d'articulation (13).

12. Machine selon l'une des revendications 1 à 11, **caractérisée en ce que** le corps centrifuge (20) est monté de manière articulée et présente à son extrémité libre pivotante (26) des moyens de guidage (27) à complémentarité de forme.

13. Machine selon l'une des revendications 1 à 12, **caractérisée en ce que** le corps centrifuge (20) est monté de manière articulée sur un palier de pivotement (28), son extrémité libre (26) étant dirigée, à partir du palier de pivotement (28), dans un sens de rotation de fonctionnement (17) du tambour (8).

14. Machine selon l'une des revendications 1 à 13, **caractérisée en ce que** la transmission est formée, dans sa partie entre la protection de surcharge (3) et l'engrenage (7), par un bout d'arbre court (29) qui est monté avec en tout un palier de roulement (30), le palier de roulement (30) étant fixé entre le corps de support (11) avec le corps centrifuge (20), et un pignon d'entrée (31) de l'engrenage (7).

15. Machine selon l'une des revendications 1 à 14, **caractérisée en ce qu'**elle comporte un engrenage (7), la protection de surcharge (3) étant disposée dans la transmission entre le moteur électrique (4) et l'engrenage (7).

16. Machine selon la revendication 15, **caractérisée en ce que** l'engrenage (7) présente, côté sortie, une broche d'outil (2) ainsi qu'un dispositif de blocage (21) pour la broche d'outil (2).
